# EUROPEAN PATENT APPLICATION

(11) **EP 4 711 687 A1**
(43) Date of publication of application: **18.03.2026**
(21) Application number: 25201528.4
(22) Date of filing: 11.09.2025
(51) Int. Cl.: F25B 9/00, B60H 1/32, F24F 1/022, F25B 9/06, F25B 19/00

(54) **AIR CONDITIONING SYSTEM**

(30) Priority: 13.09.2024 JP 2024158997; 09.09.2025 EP 25200981
(71) Applicant: Izumi, Sennai Masato, Tokyo 170-0012 (JP)
(72) Inventor: Izumi, Sennai Masato, Tokyo 170-0012 (JP)
(74) Representative: Gille Hrabal Partnerschaftsgesellschaft mbB Patentanwälte

(57) **Abstract**

An HVAC system includes: an outer tube; an inner tube coaxially disposed in the outer tube; and a rotor coaxially disposed in the inner tube. The inner tube forms an outer airflow passage between the outer tube and the inner tube. The rotor forms an inner airflow passage between the inner tube and the rotor. The HVAC system further includes a compression stage disposed at a first position in a central axis direction of the outer tube, an expansion stage disposed at a second position, different from the first position, in the central axis direction, and a heat exchanger disposed between the compression stage and the expansion stage in the central axis direction. The compression stage includes a first rotary blade that is connected to the rotor. The expansion stage includes a second rotary blade that is connected to the rotor. The heat exchanger includes a plurality of partition walls that separate a first channel and a second channel from one another. The first channel and the second channel are inserted in the inner airflow passage and the outer airflow passage, respectively.

## Description

### TECHNICAL FIELD

The present disclosure relates to a heating, ventilation, and air conditioning (HVAC) system.

### BACKGROUND ART

A refrigeration cycle, in which a refrigerant is cooled by repeating a series of operations including compression, condensation, expansion, and evaporation, is used in typical HVAC systems (see for example Japanese Patent Laid-Open No. 2004-108683).

### SUMMARY OF INVENTION

The present disclosure provides a novel HVAC system in which a principle different from the conventional refrigeration cycle is used.

The HVAC system includes: an outer tube; an inner tube coaxially disposed in the outer tube; and a rotor coaxially disposed in the inner tube. The inner tube forms an outer airflow passage between the outer tube and the inner tube. The rotor forms an inner airflow passage between the inner tube and the rotor. The HVAC system further includes a compression stage disposed at a first position in a central axis direction of the outer tube, an expansion stage disposed at a second position, different from the first position, in the central axis direction, and a heat exchanger disposed between the compression stage and the expansion stage in the central axis direction. The compression stage includes a first rotary blade that is connected to the rotor. The expansion stage includes a second rotary blade that is connected to the rotor. The heat exchanger includes a plurality of partition walls that separate a first channel and a second channel from one another. The first channel and the second channel are inserted in the inner airflow passage and the outer airflow passage, respectively.

According to the present disclosure, a novel HVAC system can be provided in which a principle different from the conventional refrigeration cycle is used.

### BRIEF DESCRIPTION OF DRAWINGS

FIG. 1 is a longitudinal cross-sectional view of an HVAC system according to an embodiment of the present disclosure.
FIG. 2 is a transverse cross-sectional view illustrating cross-section A in FIG. 1.
FIG. 3 is a transverse cross-sectional view illustrating cross-section B in FIG. 1.
FIG. 4A is a longitudinal cross-sectional view illustrating cross-section C in FIGS. 2 and 3.
FIG. 4B is a longitudinal cross-sectional view illustrating cross-section D in FIGS. 2 and 3.
FIG. 5A is a top perspective view of a first inner blocker.
FIG. 5B is a bottom perspective view of the first inner blocker.
FIG. 6A is a top perspective view of a first outer blocker.
FIG. 6B is a bottom perspective view of the first outer blocker.
FIG. 7 is a perspective view illustrating partition walls.
FIG. 8 is a perspective view illustrating a first rotary blade and a second rotary blade.

### DESCRIPTION OF EMBODIMENTS

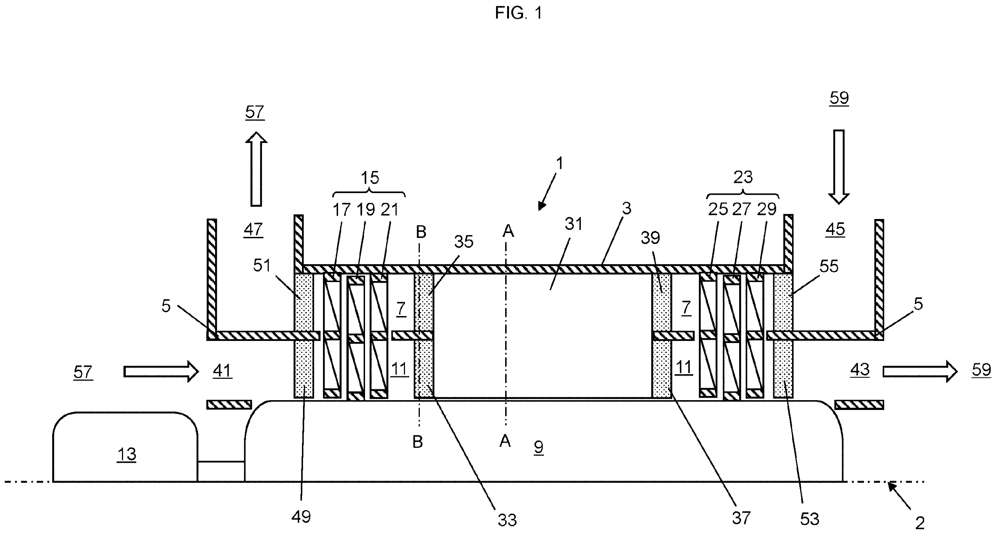

FIG. 1 illustrates an HVAC system 1. Because the HVAC system 1 is axisymmetric, the bottom half of the HVAC system 1 is not illustrated in FIG. 1. For example, the HVAC system 1 is embedded in a wall that partitions a first space 57 and a second space 59 from one another. For example, the first space 57 is outdoors. For example, the second space 59 is indoors.

The HVAC system 1 includes an outer tube 3, an inner tube 5 disposed coaxially in the outer tube 3, a rotor 9 disposed coaxially in the inner tube 5, and a motor 13 coupled to the rotor 9. An outer airflow passage 7 is formed between the outer tube 3 and the inner tube 5. An inner airflow passage 11 is formed between the inner tube 5 and the rotor 9. The motor 13 causes the rotor 9 to rotate.

The HVAC system 1 further includes a compression stage 15 disposed at a first position in the central axis direction 2 of the outer tube 3. The compression stage 15 may include one or more rotary blades connected to the rotor 9, and one or more stationary blades connected to the outer tube 3. In the present embodiment, the compression stage 15 includes two first stationary blades (first stationary blades 17 and 21), and one first rotary blade (first rotary blade 19) disposed between the first stationary blades 17 and 21.

The HVAC system 1 further includes an expansion stage 23 disposed at a second position, different from the first position, in the central axis direction 2. The expansion stage 23 may include one or more rotary blades connected to the rotor 9, and one or more stationary blades connected to the outer tube 3. In the present embodiment, the expansion stage 23 includes two second stationary blades (second stationary blades 25 and 29), and one second rotary blade (second rotary blade 27) disposed between the second stationary blades 25 and 29.

The HVAC system 1 further includes a heat exchanger 31 disposed between the compression stage 15 and the expansion stage 23 in the central axis direction 2. By causing the rotor 9 to rotate, the motor 13 forms an inner airflow from the first space 57 to the second space 59 in the inner airflow passage 11, and forms an outer airflow from the second space 59 to the first space 57 in the outer airflow passage 7. The heat exchanger 31 promotes the exchange of heat between the air in the inner airflow passage 11 and the air in the outer airflow passage 7.

The inner airflow passage 11 has an inner intake port 41 disposed in the first space 57, and an inner discharge port 43 disposed in the second space 59. The outer airflow passage 7 has an outer intake port 45 disposed in the second space 59, and an outer discharge port 47 disposed in the first space 57. The compression stage 15 receives air at ambient temperature and ambient pressure from the first space 57 via the inner airflow passage 11, and warms and pressurizes the air. On the other hand, the expansion stage 23 receives air at ambient temperature and ambient pressure from the second space 59 via the outer airflow passage 7, and cools and depressurizes the air. The heat exchanger 31 promotes the exchange of heat between the air at high temperature and high pressure and the air at low temperature and low pressure to generate air at ambient temperature and high pressure and air at ambient temperature and low pressure. The expansion stage 23 receives the air at ambient temperature and higher pressure from the heat exchanger 31 via the inner airflow passage 11, cools and depressurizes the air, and discharges air at low temperature and ambient pressure to the second space 59. On the other hand, the compression stage 15 receives the air at ambient temperature and low pressure from the heat exchanger 31 via the outer airflow passage 7, heats and pressurizes the air, and discharges air at high temperature and ambient pressure to the first space 57. In such a manner, the HVAC system 1 forms a difference in temperature between the first space 57 and the second space 59 while performing ventilation between the first space 57 and the second space 59.

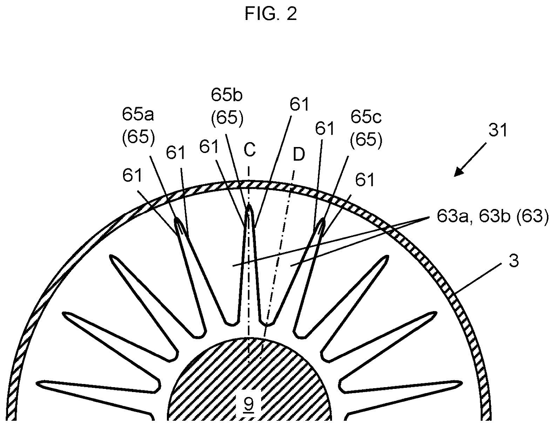

The heat exchanger 31 may have any appropriate structure that makes it possible for the heat exchanger 31 to exchange heat between the air inside the outer airflow passage 7 and the air inside the inner airflow passage 11. In the present embodiment, the heat exchanger 31 includes a plurality of partition walls 61 that separate a first channel 63 and a second channel 65 from one another, as illustrated in FIG. 2. The first channel 63 is inserted in the inner airflow passage 11. The second channel 65 is inserted in the outer airflow passage 7. The partition walls 61 are formed from metal or non-metal. In order to improve heat-exchange efficiency, the partition walls 61 may be formed from a material having high thermal conductivity.

The first channel 63 includes a plurality of first sub-channels (18 first sub-channels in the present embodiment). The plurality of first sub-channels include first sub-channels 63a and 63b. The second channel 65 includes a plurality of second sub-channels (18 second sub-channels in the present embodiment). The plurality of second sub-channels include second sub-channels 65a, 65b, and 65c. The first sub-channels 63a and 63b and the second sub-channels 65a, 65b, and 65c are alternatingly arranged in the circumferential direction of the outer tube 3. The first sub-channels 63a and 63b extend from near the rotor 9 to the outer tube 3 in the radial direction of the outer tube 3. The second sub-channels 65a, 65b, and 65c extend from the rotor 9 to near the outer tube 3 in the radial direction of the outer tube 3. Such a layout of the first sub-channels 63a and 63b and the second sub-channels 65a, 65b, and 65c increases the total area of the plurality of partition walls 61 and thereby increases the heat-exchange efficiency of the heat exchanger 31.

As illustrated in FIG. 1, the HVAC system 1 further includes a first inner blocker 33 and a second inner blocker 37 so that the inner airflow passage 11 is connected to the first channel 63 but not connected to the second channel 65. The HVAC system 1 further includes a first outer blocker 35 and a second outer blocker 39 so that the outer airflow passage 7 is connected to the second channel 65 but not connected to the first channel 63.

The first inner blocker 33 is disposed in the inner airflow passage 11, and is disposed between the compression stage 15 and the heat exchanger 31. The second inner blocker 37 is disposed in the inner airflow passage 11, and is disposed between the expansion stage 23 and the heat exchanger 31. The first outer blocker 35 is disposed in the outer airflow passage 7, and is disposed between the compression stage 15 and the heat exchanger 31. The second outer blocker 39 is disposed in the outer airflow passage 7, and is disposed between the expansion stage 23 and the heat exchanger 31.

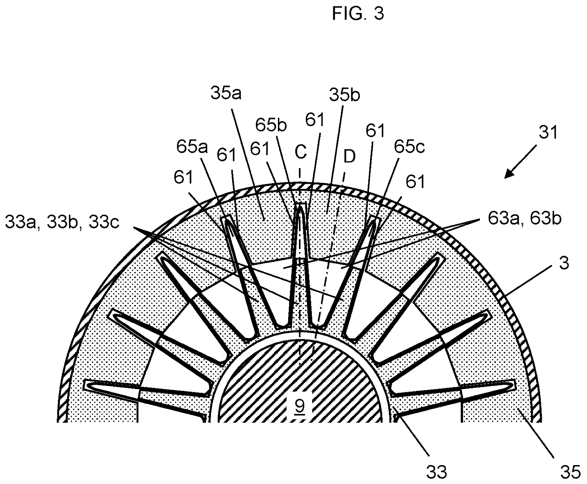

As illustrated in FIG. 3, the first inner blocker 33 includes a plurality of first inner lids (18 first inner lids in the present embodiment) that each close off a corresponding one of the plurality of second sub-channels (18 second sub-channels in the present embodiment). First inner lids 33a, 33b, and 33c respectively close off the second sub-channels 65a, 65b, and 65c. The first inner lids 33a, 33b, and 33c prevent air from flowing into the second sub-channels 65a, 65b, and 65c from the inner airflow passage 11. The first outer blocker 35 includes a plurality of first outer lids (18 first outer lids in the present embodiment) that each close off a corresponding one of the plurality of first sub-channels (18 first sub-channels in the present embodiment). First outer lids 35a and 35b respectively close off the first sub-channels 63a and 63b. The first outer lids 35a and 35b prevent air from flowing into the outer airflow passage 7 from the first sub-channels 63a and 63b.

Similarly to the first inner blocker 33, the second inner blocker 37 includes a plurality of second inner lids that each close off a corresponding one of the plurality of second sub-channels. Second inner lids 37a, 37b, and 37c respectively close off the second sub-channels 65a, 65b, and 65c. The second inner lids 37a, 37b, and 37c prevent air from flowing into the inner airflow passage 11 from the second sub-channels 65a, 65b, and 65c. Similarly to the first outer blocker 35, the second outer blocker 39 includes a plurality of second outer lids that each close off a corresponding one of the plurality of first sub-channels. Second outer lids 39a and 39b respectively close off the first sub-channels 63a and 63b. The second outer lids 39a and 39b prevent air from flowing into the first sub-channels 63a and 63b from the outer airflow passage 7.

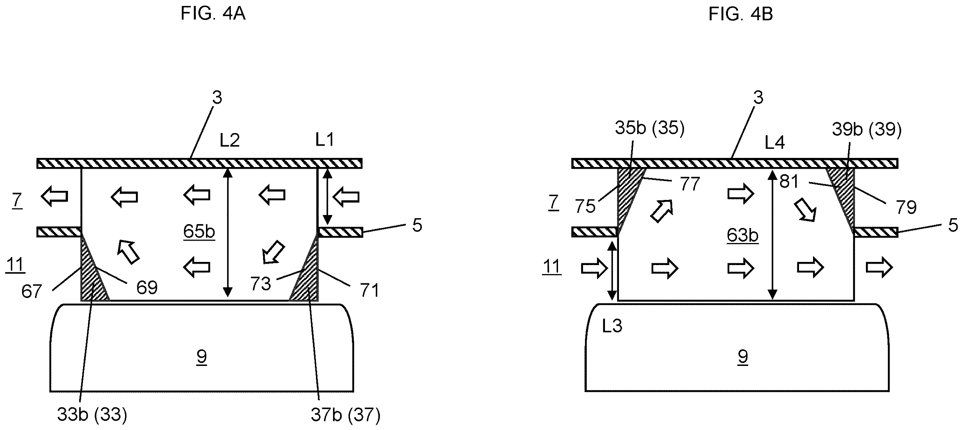

The first inner lids 33a, 33b, and 33c and the second inner lids 37a, 37b, and 37c may have any appropriate structure that makes it possible for the first inner lids 33a, 33b, and 33c and the second inner lids 37a, 37b, and 37c to close off the second sub-channels 65a, 65b, and 65c. In the present embodiment, the first inner lid 33b includes a vertical surface 67 facing the compression stage 15 and a sloped surface 69 facing the interior of the second sub-channel 65b, as illustrated in FIG. 4A. The vertical surface 67 is orthogonal to the central axis direction 2. The sloped surface 69 is inclined with respect to the vertical surface 67. The vertical surface 67 is suitable for blocking airflow. The sloped surface 69 is suitable for directing air outward in the radial direction of the outer tube 3. The second inner lid 37b includes a vertical surface 71 facing the expansion stage 23 and a sloped surface 73 facing the interior of the second sub-channel 65b. The vertical surface 71 is orthogonal to the central axis direction 2. The sloped surface 73 is inclined with respect to the vertical surface 71. The vertical surface 71 is suitable for blocking airflow. The sloped surface 73 is suitable for directing air inward in the radial direction of the outer tube 3.

The first outer lids 35a and 35b and the second outer lids 39a and 39b may have any appropriate structure that makes it possible for the first outer lids 35a and 35b and the second outer lids 39a and 39b to close off the first sub-channels 63a and 63b. In the present embodiment, the first outer lid 35b includes a vertical surface 75 facing the compression stage 15 and a sloped surface 77 facing the interior of the first sub-channel 63b, as illustrated in FIG. 4B. The vertical surface 75 is orthogonal to the central axis direction 2. The sloped surface 77 is inclined with respect to the vertical surface 75. The vertical surface 75 is suitable for blocking airflow. The sloped surface 77 is suitable for directing air outward in the radial direction of the outer tube 3. The second outer lid 39b includes a vertical surface 79 facing the expansion stage 23 and a sloped surface 81 facing the interior of the first sub-channel 63b. The vertical surface 79 is suitable for blocking airflow. The sloped surface 81 is suitable for directing air inward in the radial direction.

As illustrated in FIG. 4A, the outer airflow passage 7 has a first length L1 in the radial direction of the outer tube 3. The second sub-channel 65b has a second length L2 in the radial direction of the outer tube 3. The second length L2 may be greater than the first length L1.

As illustrated in FIG. 4B, the inner airflow passage 11 has a third length L3 in the radial direction of the outer tube 3. The first sub-channel 63b has a fourth length L4 in the radial direction of the outer tube 3. The fourth length L4 may be greater than the third length L3.

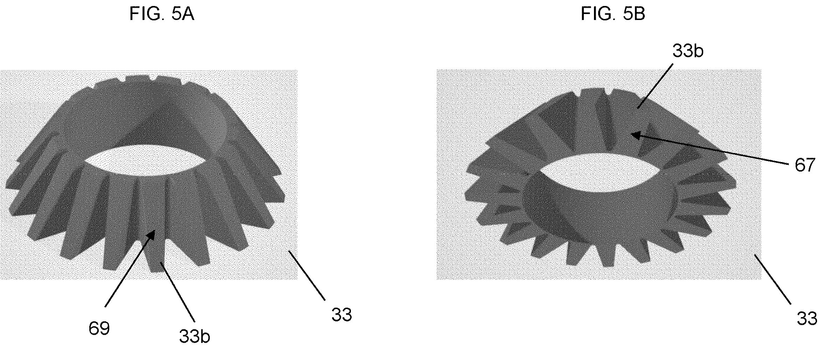

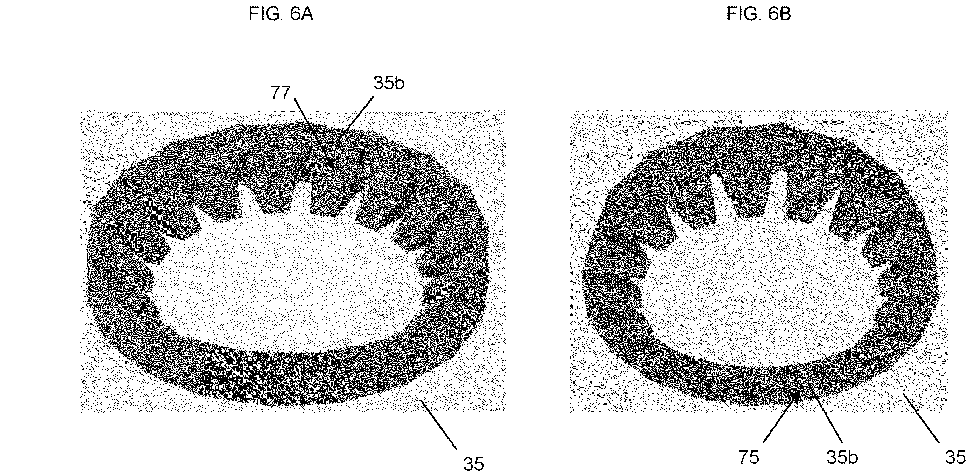

The first inner lid 33b is indicated representatively in FIG. 4A. The first inner blocker 33 may be axisymmetric as illustrated in FIGS. 5A and 5B, and thus the plurality of first inner lids 33a, 33b, and 33c may be identical to one another. The same applies to the second inner blocker 37. The first outer lid 35b is indicated representatively in FIG. 4B. The first outer blocker 35 may be axisymmetric as illustrated in FIGS. 6A and 6B, and thus the plurality of first outer lids 35a and 35b may be identical to one another. The same applies to the second outer blocker 39.

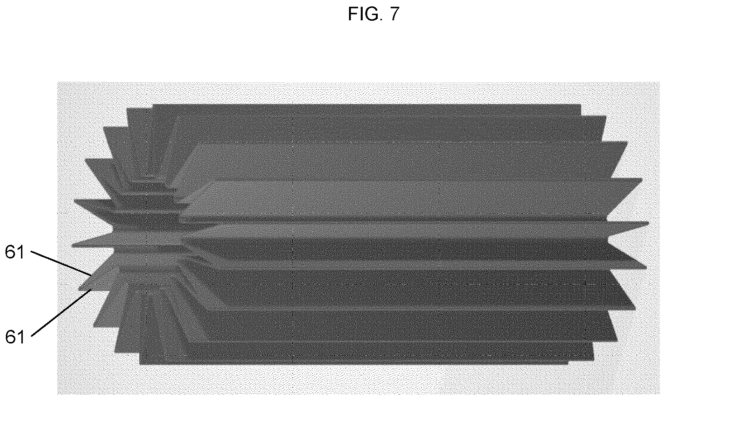

As illustrated in FIG. 7, the plurality of partition walls 61 are each disposed in parallel to the central axis direction 2 in the present embodiment. However, there is no limitation to this, and the plurality of partition walls 61 may be skewed with respect to the central axis direction 2.

In the present embodiment, each of the plurality of partition walls 61 is a flat plate. The partition walls 61 may be embossed in order to increase strength or heat-exchange efficiency. The embossment may be provided as dimples, grooves, or other shapes.

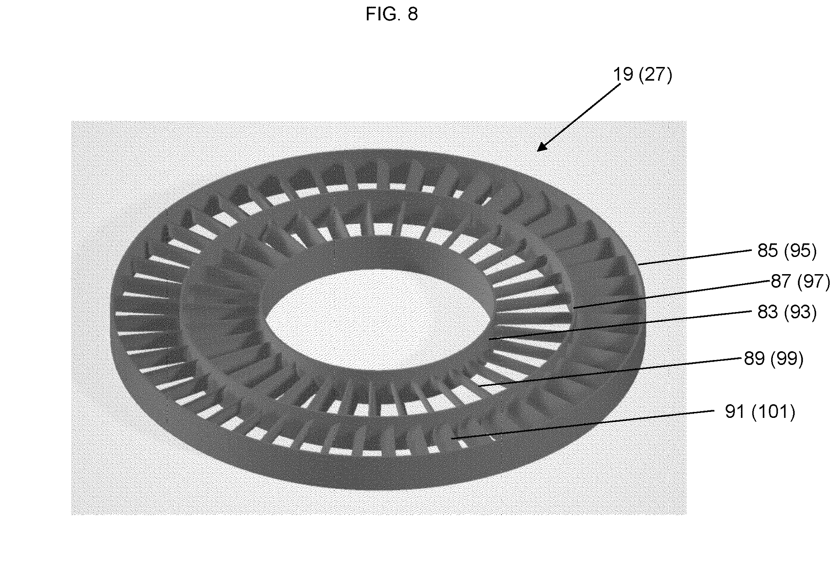

As illustrated in FIG. 8, the first rotary blade 19 may include a first inner ring 83, a first outer ring 85, and a first intermediate ring 87 between the first inner ring 83 and the first outer ring 85. The inner diameter of the first inner ring 83 may be equal to the outer diameter of the rotor 9 so that the first inner ring 83 can be fitted on the rotor 9. The outer diameter of the first outer ring 85 may be smaller than the inner diameter of the outer tube 3 so that the first outer ring 85 is spaced away from the outer tube 3. The inner diameter and the outer diameter of the first intermediate ring 87 may be equal to the inner diameter of the inner tube 5 and the outer diameter of the inner tube 5, respectively.

The first rotary blade 19 may further include a plurality of first inner vanes 89 connecting the first inner ring 83 and the first intermediate ring 87, and a plurality of first outer vanes 91 connecting the first outer ring 85 and the first intermediate ring 87. The plurality of first inner vanes 89 are disposed in the inner airflow passage 11. The plurality of first outer vanes 91 are disposed in the outer airflow passage 7.

The plurality of first inner vanes 89 may each be disposed at a first angle with respect to the central axis direction 2 of the outer tube 3. The plurality of first outer vanes 91 may each be disposed at a second angle, different from the first angle, with respect to the central axis direction 2 of the outer tube 3. The first angle may be an angle such that an inner airflow from the first space 57 to the second space 59 is formed in the inner airflow passage 11 when the rotor 9 rotates. The second angle may be an angle such that an outer airflow from the second space 59 to the first space 57 is formed in the outer airflow passage 7 when the rotor 9 rotates.

Similarly to the first rotary blade 19, the second rotary blade 27 may include a second inner ring 93, a second outer ring 95, and a second intermediate ring 97 between the second inner ring 93 and the second outer ring 95. The inner diameter of the second inner ring 93 may be equal to the outer diameter of the rotor 9 so that the second inner ring 93 can be fitted on the rotor 9. The outer diameter of the second outer ring 95 may be smaller than the inner diameter of the outer tube 3 so that the second outer ring 95 is spaced away from the outer tube 3. The inner diameter and the outer diameter of the second intermediate ring 97 may be equal to the inner diameter of the inner tube 5 and the outer diameter of the inner tube 5, respectively.

The second rotary blade 27 may further include a plurality of second inner vanes 99 connecting the second inner ring 93 and the second intermediate ring 97, and a plurality of second outer vanes 101 connecting the second outer ring 95 and the second intermediate ring 97. The plurality of second inner vanes 99 are disposed in the inner airflow passage 11. The plurality of second outer vanes 101 are disposed in the outer airflow passage 7.

The plurality of second inner vanes 99 may each be disposed at a third angle with respect to the central axis direction 2 of the outer tube 3. The plurality of second outer vanes 101 may each be disposed at a fourth angle, different from the third angle, with respect to the central axis direction 2 of the outer tube 3. The third angle may be an angle such that an inner airflow from the first space 57 to the second space 59 is formed in the inner airflow passage 11 when the rotor 9 rotates. The fourth angle may be an angle such that an outer airflow from the second space 59 to the first space 57 is formed in the outer airflow passage 7 when the rotor 9 rotates.

Returning to FIG. 1, the first stationary blades 17 and 21 may have a structure resembling that of the first rotary blade 19. However, because the first stationary blades 17 and 21 are connected to the outer tube 3 and spaced away from the rotor 9, the first stationary blades 17 and 21 are different from the first rotary blade 19 in terms of the inner diameter of the first inner ring 83 and the outer diameter of the first outer ring 85. The second stationary blades 25 and 29 are also the same as the first stationary blades 17 and 21.

As mentioned above, the inner airflow passage 11 has the inner intake port 41 and the inner discharge port 43. The outer airflow passage 7 has the outer intake port 45 and the outer discharge port 47. The inner intake port 41 may be open along the central axis direction 2 of the outer tube 3. The inner discharge port 43 may be open along the central axis direction 2 of the outer tube 3. The outer intake port 45 may be open along the radial direction of the outer tube 3. The outer discharge port 47 may be open along the radial direction of the outer tube 3. The difference in opening direction between the inner discharge port 43 and the outer intake port 45 contributes to reducing the short-circuiting of air between the inner discharge port 43 and the outer intake port 45. Similarly, the difference in opening direction between the outer discharge port 47 and the inner intake port 41 contributes to reducing the short-circuiting of air between the outer discharge port 47 and the inner intake port 41.

The HVAC system 1 may further include diffusers 49 and 53 in the inner airflow passage 11. The HVAC system 1 may further include diffusers 51 and 55 in the outer airflow passage 7. The diffusers 49, 51, 53, and 55 are suitable for adjusting the direction of airflow.

An embodiment of the present disclosure has been described above; however, the present disclosure is not limited to the above-described embodiment, and various modifications can be made without departing from the spirit and scope of the invention. In particular, multiple modifications disclosed herein can be combined as necessary and as appropriate.

For example, the expansion stage 23 in the outer airflow passage 7 may be omitted to simplify the structure.

In the above-described embodiment, the compression stage 15 includes an axial compressor. Without limitation to this, the compression stage 15 may include a radial compressor.

A valve may be used instead of both turbines on the right side to produce a pressure drop.

### REFERENCE SIGNS LIST

- 1:: HVAC system
- 3:: Outer tube
- 5:: Inner tube
- 7:: Outer airflow passage
- 9:: Rotor
- 11:: Inner airflow passage
- 15:: Compression stage
- 23:: Expansion stage
- 31:: Heat exchanger
- 61:: Partition wall
- 63:: First channel
- 65:: Second channel

## Claims

1. A heating, ventilation, and air conditioning (HVAC) system (1) comprising:
an outer tube (3);
an inner tube (5) coaxially disposed in the outer tube, an outer airflow passage (7) being formed between the outer tube and the inner tube;
a rotor (9) coaxially disposed in the inner tube, an inner airflow passage (11) being formed between the inner tube and the rotor;
a compression stage (15) disposed at a first position in a central axis direction of the outer tube, the compression stage including a first rotary blade (19) that is connected to the rotor;
an expansion stage (23) disposed at a second position, different from the first position, in the central axis direction, the expansion stage including a second rotary blade (27) that is connected to the rotor; and
a heat exchanger (31) disposed between the compression stage and the expansion stage in the central axis direction, the heat exchanger including a plurality of partition walls (61) that separate a first channel (63) and a second channel (65) from one another, the first channel and the second channel being inserted in the inner airflow passage and the outer airflow passage, respectively.

2. The HVAC system according to claim 1,
wherein the first channel (63) includes a plurality of first sub-channels (63a, 63b),
the second channel (65) includes a plurality of second sub-channels (65a, 65b, 65c), and
the plurality of first sub-channels and the plurality of second sub-channels are alternatingly arranged in a circumferential direction of the outer tube.

3. The HVAC system according to claim 2 further comprising:
a first inner blocker (33) disposed in the inner airflow passage and disposed between the compression stage and the heat exchanger, the first inner blocker including a plurality of first inner lids (33a, 33b, 33c) each of which closes off a corresponding one of the plurality of second sub-channels (65a, 65b, 65c);
a first outer blocker (35) disposed in the outer airflow passage and disposed between the compression stage and the heat exchanger, the first outer blocker including a plurality of first outer lids (35a, 35b) each of which closes off a corresponding one of the plurality of first sub-channels (63a, 63b);
a second inner blocker (37) disposed in the inner airflow passage and disposed between the expansion stage and the heat exchanger, the second inner blocker including a plurality of second inner lids each of which closes off a corresponding one of the plurality of second sub-channels; and
a second outer blocker (39) disposed in the outer airflow passage and disposed between the expansion stage and the heat exchanger, the second outer blocker including a plurality of second outer lids each of which closes off a corresponding one of the plurality of first sub-channels.

4. The HVAC system according to claim 3,
wherein each of the plurality of first inner lids (33b) includes a vertical surface (67) facing the compression stage and a sloped surface (69) facing an interior of the corresponding one of the plurality of second sub-channels, and
each of the plurality of second outer lids (39b) includes a vertical surface (79) facing the expansion stage and a sloped surface (81) facing an interior of the corresponding one of the plurality of first sub-channels.

5. The HVAC system according to claim 4,
each of the plurality of first outer lids (35b) includes a vertical surface (75) facing the compression stage and a sloped surface (77) facing an interior of the corresponding one of the plurality of first sub-channels, and
each of the plurality of second inner lids (37b) includes a vertical surface (71) facing the expansion stage and a sloped surface (73) facing an interior of the corresponding one of the plurality of second sub-channels.

6. The HVAC system according to claim 1,
wherein the first rotary blade (19) includes:
a first inner ring (83);
a first outer ring (85);
a first intermediate ring (87) between the first inner ring and the first outer ring;
a plurality of first inner vanes (89) connecting the first inner ring and the first intermediate ring; and
a plurality of first outer vanes (91) connecting the first outer ring and the first intermediate ring,
the plurality of first inner vanes are each disposed at a first angle with respect to the central axis direction, and
the plurality of first outer vanes are each disposed at a second angle, different from the first angle, with respect to the central axis direction.

7. The HVAC system according to claim 6,
wherein the second rotary blade (27) includes:
a second inner ring (93);
a second outer ring (95);
a second intermediate ring (97) between the second inner ring and the second outer ring;
a plurality of second inner vanes (99) connecting the second inner ring and the second intermediate ring; and
a plurality of second outer vanes (101) connecting the second outer ring and the second intermediate ring,
the plurality of second inner vanes are each disposed at a third angle with respect to the central axis direction, and
the plurality of second outer vanes are each disposed at a fourth angle, different from the third angle, with respect to the central axis direction.

8. The HVAC system according to claim 1,
wherein the inner airflow passage (11) has an inner intake port (41) and an inner discharge port (43), the inner intake port and the inner discharge port being open along the central axis direction, and
the outer airflow passage (7) has an outer intake port (45) and an outer discharge port (47), the outer intake port and the outer discharge port being open along a radial direction of the outer tube.

9. The HVAC system according to claim 1 further comprising
a motor (13) coupled to the rotor.
